# EUROPEAN PATENT SPECIFICATION

(11) **EP 0 680 899 B1**
(45) Date of publication and mention of the grant of the patent: **08.07.1998**
(21) Application number: 95201100.5
(22) Date of filing: 28.04.1995
(51) Int. Cl.: B65G 47/53, B65G 15/60

(54) **A conveyor**
Förderer
Transporteur

(30) Priority: 06.05.1994 NL 9400755
(43) Date of publication of application: 08.11.1995
(73) Proprietor: VANDERLANDE INDUSTRIES NEDERLAND B.V., NL-5466 RB Veghel (NL)
(72) Inventor: Bodewes, Hermanus Josephus Arnoldus, NL-5403 LC Uden (NL)
(74) Representative: Vollebregt, Cornelis Jacobus, Ir.

(56) References cited:
- US-A- 2 128 594
- US-A- 2 128 595

## Description

The invention relates to a conveyor provided with an elongated transport means and with an endless conveyor belt, which is passed over two guide rollers located near its ends, whereby said conveyor belt joins one side of said transport means at an angle deviating from 90°, all this in such a manner that during operation the objects to be moved can be supplied from said conveyor belt to said transport means or from said transport means to said conveyor belt, as the case may be, and whereby guide means positioned one above the other are disposed near the point where said conveyor belt joins said transport means, one of two parts of said endless conveyor belt being positioned one above the other and extending from the one guide roller disposed at some distance from said transport means in the direction of said transport means and being guided downwards over each of said guide means in the direction of the other guide roller.

A conveyor of this type is known from French Patent No. 2,182,148. With this known conveyor the two belt parts extending from the guide roller of the conveyor belt disposed at some distance from the transport means are guided downwards over the guide means through an angle of about 90° in the direction of the other guide roller, whose axis of rotation crosses the axis of rotation of the guide roller being disposed at some distance from the transport means at an angle of ± 90°. The part of the conveyor belt which is guided downwards thereby extends substantially beside the transport means, seen in plan view, and beside that part of the conveyor belt by means of which the objects to be moved can be supplied to the transport means or discharged from said transport means. A drawback of this is inter alia the fact that it becomes difficult to have several conveyor belts join the transport means in closely spaced relationship.

According to the invention further guide means are provided both under the guide means of the upper part of the conveyor belt and under the guide means of the lower part of the conveyor belt, and both belt parts are passed under said further guide means in the direction of the other guide roller disposed under said transport means and extending at least substantially parallel to the guide roller disposed at some distance from said transport means.

By using this construction the part of the conveyor belt which joins that part of the conveyor belt whose upper part is effective for moving the objects and which extends at least substantially parallel to the latter part of the conveyor belt can be disposed under the transport means, where sufficient space is usually available. It is thereby made possible to have several conveyor belts join the transport means in closely spaced relationship, if desired.

It is noted that from Dutch Patent Application No. 9100846 a conveyor belt is known which is passed over guide rollers disposed near its ends, the axes of rotation of said guide rollers extending perpendicularly to each other, whilst both the upper part and the lower part of the endless belt are passed over guide means which cross the axes of rotation of the guide rollers at an angle deviating from 90°. Also when this known conveyor belt is combined with a further transport means in such a manner that the guide means extend substantially parallel to the longitudinal direction of the further transport means, a further, not actively operative part of the conveyor belt will be located beside the part of the conveyor belt which is effectively operative for moving the objects and beside the transport means, in such a manner that also with this construction it will not be possible to arrange several conveyor belts joining the transport means in closely spaced relationship.

From US-A-2,128,594 and US-A-2,128,595 conveyor belts are known whereby parts extending horizontally from a horizontally disposed guide roller are deflected along guide means, about perpendicularly to the horizontally extending parts, in the direction of a second guide roller. The axis of rotation of the second guide roller thereby includes a comparatively large angle with the horizontal, which results in a disadvantageous height of the construction.

The invention will be explained in more detail hereafter with reference to an embodiment of the construction according to the invention diagrammatically illustrated in the accompanying Figures, wherein:
Figure 1 is a diagrammatic plan view of a conveyor according to the invention, with two conveyor belts joining each other at an angle deviating from 90°;
Figure 2 is a view of the conveyor according to the invention shown in Figure 1, seen in the direction according to the arrow II in Figure 1;

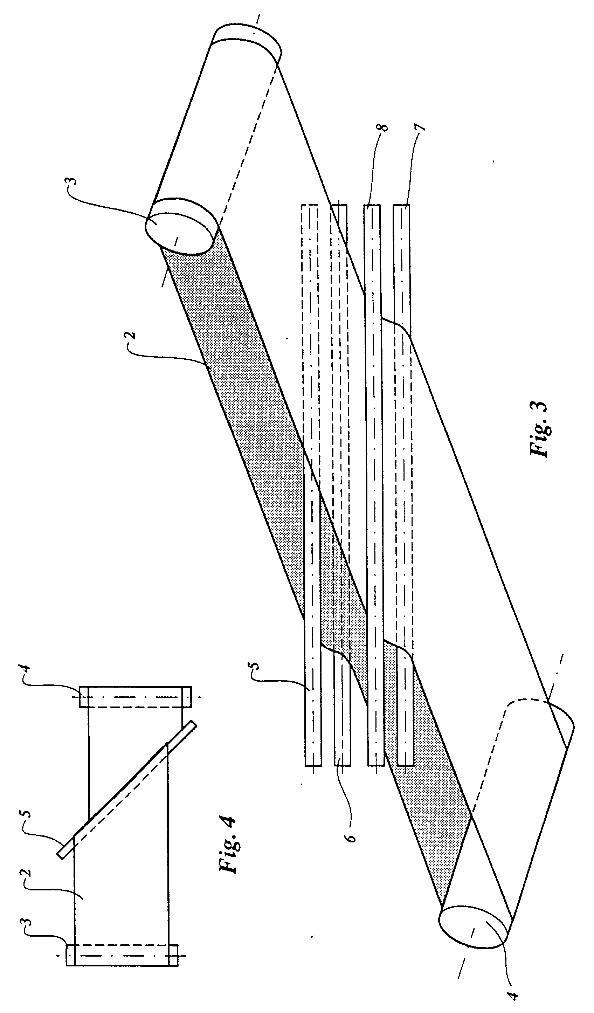

Figure 3 is a perspective view of a conveyor belt used in the conveyor according to the invention; and
Figure 4 is a smaller-scale plan view of the conveyor belt shown in Figure 3.

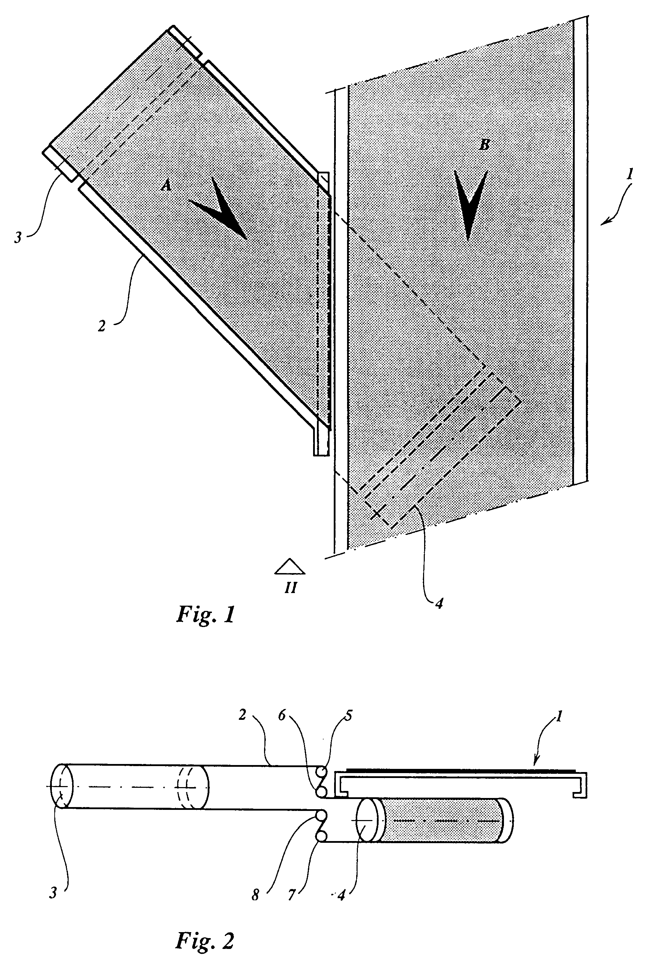

As is shown in Figure 1, the conveyor diagrammatically illustrated in Figure 1 comprises a transport means 1, which is made up of an endless conveyor belt 2 in the illustrated embodiment. Of course also other embodiments of this transport means are conceivable, such as a transport means in the form of a roller conveyor.

A conveyor belt 2 joins one side of the transport means at an angle deviating from 90°. The conveyor belt 2 is passed over two guide rollers 3 and 4 disposed near the ends of the conveyor belt 2, whose axes of rotation extending parallel to each other include an angle deviating from 90° with the longitudinal direction of the transport means 1, as will be apparent in particular from Figure 1. The guide roller 4 is thereby disposed under the transport means 1.

Near the point where the conveyor belt 2 joins the transport means 1 four guide means 5 - 8, which are made up of fixedly disposed bars and which extend in the longitudinal direction of the transport means 1, are disposed one above the other.

The upper part of the conveyor belt 2 extends from the roller 3 disposed at some distance from the conveyor 1 in the direction of an upper guide means 5 disposed near the transport means 1, in a plane which lies at the same level or slightly higher than the upper surface of the transport means 1.

The upper part passed over the guide means 5 is guided downwards along said guide means, in the direction of a guide means 6 positioned thereunder, and is in turn passed under said guide means 6 in the direction of the guide roller 4.

The lower part of the conveyor belt 2 extends from the guide roller 4 in the direction of a guide means 7 and is guided upwards under said guide means in the direction of a guide means 8. Furthermore the lower part of the conveyor belt 2 is passed along and over the guide means 8 and subsequently extends in the direction of the guide roller 3.

As will be apparent from the Figures the construction of the conveyor according to the invention makes it possible for the portions of the upper part and the lower part of the conveyor belt 2 beside the transport means 1 to be located at a higher level than parts of the conveyor belt joining said parts, which extend under the transport means 1.

As is indicated by means of arrows in the Figures, objects can be supplied in the direction according to arrow A, by means of the conveyor belt 2, to the transport means 1, by which objects are moved in the direction according to arrow B. It will also be possible, however, for objects to be moved in a direction opposite the arrow B by means of said transport means 1, whilst said objects are discharged from the transport means 1 in a direction opposite the arrow A by means of the conveyor belt 2. As will furthermore be apparent, in particular from Figure 1, the part of the conveyor belt 2 located under the transport means 1 is only slightly staggered in longitudinal direction with respect to the part of the conveyor belt 2 located beside the transport means 1. Practically no further parts of the transport belt 2 are disposed beside the part of the conveyor belt 2 effectively cooperating with the transport means 1 and being located therebeside, as is the case with the known constructions, as a result of which no unnecessary space is occupied beside the transport means 1 by parts of the conveyor belt 2 which are not effectively operative. An advantage of this is for example that several conveyor belts 2 can be disposed to join the transport means 1 in closely spaced relationship.

## Claims

1. A conveyor provided with an elongated transport means (1) and with an endless conveyor belt (2), which is passed over two guide rollers (3,4) located near its ends, whereby said conveyor belt (2) joins one side of said transport means (1) at an angle deviating from 90°, all this in such a manner that during operation the objects to be moved can be supplied from said conveyor belt (2) to said transport means (1) or from said transport means (1) to said conveyor belt (2), as the case may be, and whereby guide means (5,8) positioned one above the other are disposed near the point where said conveyor belt (2) joins said transport means (1), one of two parts of said endless conveyor belt (2) being positioned one above the other and extending from the one guide roller (3) disposed at some distance from said transport means (1) in the direction of said transport means (1) and being guided downwards over each of said guide means (5,8) in the direction of the other guide roller (4), characterized in that further guide means (6,7) are provided both under the guide means (5) of the upper part of the conveyor belt (2) and under the guide means (8) of the lower part of the conveyor belt (2), and both belt parts are passed under said further guide means (6,7) in the direction of the other guide roller (4) disposed under said transport means (1) and extending at least substantially parallel to the guide roller (3) disposed at some distance from said transport means (1).

2. A conveyor according to claim 1, characterized in that said guide means (5,6,7,8) are made up of fixedly disposed bars extending at least substantially parallel to the longitudinal direction of said transport means (1).

3. A conveyor belt in particular intended for a conveyor according to claim 1 or 2, whereby said conveyor belt (2) is near its ends passed over guide rollers (3,4), which are rotatable about axes of rotation extending at least substantially parallel to each other, characterized in that both the upper part and the lower part of the part of the conveyor belt (2) which extends from the one guide roller (3) are passed over and around a guide means (5,8) in the direction of a further guide means (6,7) positioned thereunder, and under said further guide means (6,7) in the direction of the other guide roller (4), whereby the longitudinal axes of the guide means (5,6,7,8) intersect or cross the axes of rotation of the guide rollers (3,4) at an acute angle.

## Patentansprüche

1. Förderer mit einem länglichen Transportmittel (1) und mit einem Endlosfördergurt (2), der über zwei nahe seinen Enden angeordnete Führungsrollen (3, 4) gelegt ist, wobei besagter Fördergurt (2) an einer Seite des besagten Transportmittels (1) in einem von 90° abweichenden Winkel angesetzt ist, und zwar in der Weise, daß während des Betriebs zu bewegende Gegenstände von besagtem Fördergurt (2) dem besagten Transportmittel (1) bzw. von besagtem Transportmittel (1) dem besagten Fördergurt (2) zugeführt werden können, und wobei übereinander positionierte Führungsmittel (5, 8) nahe dem Punkt angeordnet sind, an welchem der Fördergurt (2) an das Transportmittel (1) angesetzt ist, wobei zwei Abschnitte des Endlosfördergurtes (2) übereinander positioniert sind und sich von der einen Führungsrolle (3), die in einigem Abstand von dem Transportmittel (1) angeordnet ist, in Richtung des Transportmittels (1) erstrecken und je nach unten über jede der besagten Führungsmittel (5, 8) in Richtung der anderen Führungsrolle (4) geführt sind, dadurch gekennzeichnet, daß desweiteren Führungsmittel (6, 7) sowohl unter dem Führungsmittel (5) des oberen Abschnitts des Fördergurtes (2) als auch unter dem Führungsmittel (8) des unteren Abschnitts des Fördergurtes (2) vorgesehen sind, wobei beide Gurtabschnitte unter den weiteren Führungsmitteln (6, 7) in Richtung der anderen Führungsrolle (4), die unter dem Transportmittel (1) angeordnet ist und sich zumindest im wesentlichen parallel zu der Führungsrolle (3) erstreckt, die in einigem Abstand von dem Transportmittel (1) angeordnet ist, gelegt sind.

2. Förderer nach Anspruch 1, dadurch gekennzeichnet, daß die Führungsmittel (5, 6, 7, 8) aus fest angeordneten Stäben aufgebaut sind, die sich zumindest im wesentlichen parallel zur Längsrichtung des Transportmittels (1) erstrecken.

3. Fördergurt, der insbesondere für einen Förderer gemäß Anspruch 1 oder 2 bestimmt ist, wobei der Fördergurt (2) nahe seinen Enden über Führungsrollen (3, 4) geleitet ist, die um Drehachsen drehbar sind, die sich zumindest im wesentlichen parallel zueinander erstrecken, dadurch gekennzeichnet, daß sowohl der obere Abschnitt als auch der untere Abschnitt des sich von der einen Führungsrolle (3) erstreckenden Abschnitts des Fördergurtes (2) über und um ein Führungsmittel (5, 8) in Richtung eines weiteren darunter positionierten Führungsmittels (6, 7) und unter dem weiteren Führungsmittel (6, 7) in Richtung der anderen Führungsrolle (4) geleitet sind, wobei die Längsachsen der Führungsmittel (5, 6, 7, 8) die Drehachsen der Führungsrollen (3, 4) in einem spitzen Winkel schneiden oder kreuzen.

## Revendications

1. Transporteur comprenant un moyen de transport allongé (1) et une bande transporteuse sans fin (2) qui passe sur deux rouleaux de guidage (3, 4) placés près de ses extrémités, de sorte que ladite bande transporteuse (2) se raccorde à un premier côté dudit moyen de transport (1) suivant un angle différent de 90°, tout cela d'une manière telle que, pendant le fonctionnement, les objets à transporter peuvent être transférés de ladite bande transporteuse (2) audit moyen de transport (1) ou dudit moyen de transport (1) à ladite bande transporteuse (2), selon le cas, et de sorte que des moyens de guidage (5, 8) placés l'un au-dessus de l'autre sont disposés près du point où ladite bande transporteuse (2) se raccorde audit moyen de transport (1), une des deux parties de ladite bande transporteuse sans fin (2) étant positionnée au-dessus de l'autre partie et s'étendant à partir du rouleau de guidage (3) situé à une certaine distance dudit moyen de transport (1), dans la direction dudit moyen de transport (1), et étant guidée vers le bas autour de chacun desdits moyens de guidage (5, 8) dans la direction de l'autre rouleau de guidage (4), caractérisé en ce que des moyens de guidage supplémentaires (6, 7) sont prévus à la fois sous le moyen de guidage (5) de la partie supérieure de la bande transporteuse (2) et sous le moyen de guidage (8) de la partie inférieure de la bande transporteuse (2), et les deux parties de la bande passent sous lesdits moyens de guidage supplémentaires (6, 7) dans la direction de l'autre rouleau de guidage (4) disposé sous ledit moyen de transport (1) et s'étendant au moins sensiblement parallèlement au rouleau de guidage (3) situé à une certaine distance dudit moyen de transport (1).

2. Transporteur selon la revendication 1, caractérisé en ce que lesdits moyens de guidage (5, 6, 7, 8) sont constitués de barreaux disposés de façon fixe et s'étendant au moins sensiblement parallèlement à la direction longitudinale dudit moyen de transport (1).

3. Bande transporteuse, prévue en particulier pour un transporteur selon la revendication 1 ou 2, de sorte que ladite bande transporteuse (2) passe, près de ses extrémités, sur des rouleaux de guidage (3, 4) qui peuvent tourner autour d'axes de rotation au moins sensiblement parallèles l'un à l'autre, caractérisée en ce que le brin supérieur et le brin inférieur de la partie de la bande transporteuse (2) qui s'étend à partir du premier rouleau de guidage (3) passent tous deux sur et autour des moyens de guidage (5, 8) dans la direction d'autres moyens de guidage (6, 7) placés au-dessous des précédents, et sous lesdits moyens de guidage supplémentaires (6, 7) dans la direction de l'autre rouleau de guidage (4), les axes longitudinaux des moyens de guidage (5, 6, 7, 8) coupant ou croisant les axes de rotation des rouleaux de guidage (3, 4) suivant un angle aigu.
